Europäisches Patentamt

European Patent Office

Office européen des brevets

(19)

(11) Veröffentlichungsnummer: **0 254 760**
**B1**

## (12) EUROPÄISCHE PATENTSCHRIFT

(45) Veröffentlichungstag der Patentschrift:
**11.07.90**

(21) Anmeldenummer: **86110470.1**

(22) Anmeldetag: **29.07.86**

(51) Int. Cl.⁵: **F24C 3/00, F24H 3/00, B60H 1/22**

(54) **Raumheizgerät für Kleinräume.**

(43) Veröffentlichungstag der Anmeldung:
**03.02.88 Patentblatt 88/5**

(45) Bekanntmachung des Hinweises auf die Patenterteilung:
**11.07.90 Patentblatt 90/28**

(84) Benannte Vertragsstaaten:
**DE FR GB IT NL SE**

(56) Entgegenhaltungen:
**DE-U- 8 020 734**
**FR-A- 869 568**

(73) Patentinhaber: **Philipp Kreis GmbH & Co.**
**TRUMA-Gerätebau, Wernher-von-Braun-Strasse 12-14,**
**D-8011 Putzbrunn(DE)**

(72) Erfinder: **Mossbach, Wilhelm, Rotbuchenstrasse 37,**
**D-8011 Kirchseeon(DE)**
Erfinder: **Baur, Jörg Friedrich, Dipl.-Ing., Haferweg 25,**
**D-8000 München 81(DE)**
Erfinder: **Pirner, Albert, Gottenbrunner Weg 41,**
**D-8000 München 82(DE)**

(74) Vertreter: **Hain, Leonhard, Dipl.-Ing., Tal 18/IV,**
**D-8000 München 2(DE)**

## Beschreibung

Die Erfindung betrifft ein mit gasförmigem oder vergastem flüssigen Brennstoff befeuertes Raumheizgerät für Kleinräume, insbesondere Wohnwagen, Fahrzeug- und Schiffskabinen gemäß dem Oberbegriff des Patentanspruches 1.

Bei den bekannten Raumheizgeräten dieser Art (DE-OS 1 454 295, DE-AS 20 16 560) wird die Zu- bzw. Verbrennungsluft durch einen unter den Raumboden ragenden Eintrittsstutzen zugeführt und der aufwärtsführende Verbrennungsraum steht über dem Fußboden hoch. Ein als Wärmetauscher ausgebildeter Verbrennungsgaskanal aus einem waagrechten Querkanal sowie einem abwärtsführenden Kanal schließt sich seitlich daran an. Dieser Verbrennungsgaskanal ist in seiner ganzen Länge einzügig ausgeführt. Der abwärtsführende Kanalteil, der meist mäanderförmig ausgebildet ist, befindet sich unterhalb des im waagrechten Querkanal liegenden Randbereiches, so daß der Querkanal eine größere Erstreckung in Längsrichtung aufweist. Die Seitenwände des Verbrennungsgaskanales bilden parallele, jeweils in einer gemeinsamen Ebene liegende Flächen, die meistens in Strömungsrichtung der aufsteigenden Warmluft sowie der Verbrennungsgase verlaufende Außen- und Innenlamellen aufweisen. Diese bekannten Heizgeräte mit einem seitlichen abwärtsführenden Kanal bestanden bisher aus fertigungstechnischen Gründen aus zwei längs einer durch den Verbrennungsgaskanal gelegten Längsebene verbundenen Formschalen. Dadurch wurde es möglich, den Kanal mäanderförmig mit in Strömungsrichtung verlaufenden Kanalwänden und Lamellen auszubilden. Diese Formschalen wurden entweder miteinander verschweißt oder, wenn diese aus nicht schweißbaren oder schwierig schweißbaren Legierungen bestanden, entlang ihrer Stoßflansche vernietet bzw. verschraubt. Zur Erhöhung der Abdichtung wurde geeignetes Dichtungsmaterial dazwischengelegt. Auch wenn Formschalen die Gestaltung und Konstruktion eines Heizgerätes unter Berücksichtigung wärmetechnischer Gesichtspunkte erleichtern, so hat sich andererseits gezeigt, daß das Verbinden der beiden Formschalen schwierig und aufwendig ist. Nicht selten ist auch ein Nacharbeiten der Stoßflächen erforderlich und da das Abdichten auch im heißesten Bereich entlang dem Querkanal erfolgen muß, ist hier besondere Sorgfalt erforderlich. Bei einem Raumheizgerät dieser Art ist es durch die DE-U 8 020 734 schon bekannt, zur Verbesserung des Wärmeüberganges am Querkanal mindestens im Bereich seiner stärksten Erhitzung Außenlamellen auszubilden, wobei sich diese Außenlamellen auch auf die gesamte Länge des Querkanales erstrecken und auch die doppelte Tiefe der unteren Außenlamellen aufweisen können.

Der Erfindung liegt daher die Aufgabe zugrunde, ein Raumheizgerät gemäß dem Oberbegriff des Patentanspruches 1 so auszubilden, daß der Zusammenbau und die Montage des Gerätes vereinfacht und die Abdichtungsprobleme weitgehend beseitigt werden.

Diese Aufgabe wird an einem Heizgerät nach dem Oberbegriff des Patentanspruches 1 erfindungsgemäß durch die Kennzeichnungsmerkmale dieses Patentanspruches gelöst.

Vorteilhafte Weiterentwicklungen dieser Erfindung sind in Unteransprüchen beansprucht.

Das den Verbrennungsraum, den Querkanal und einen Teil des abwärtsführenden Kanales umgrenzende Guß-Formstück vereinfacht den Zusammenbau bzw. die Montage des Heizgerätes wesentlich, da nunmehr die lange Verbindungslinie zwischen den Formschalen mit ihren Krümmungen wegfällt und jetzt nur noch das Ansatzteil am verhältnismäßig kurzen und geraden Flansch der Gußhaube befestigt werden muß. Auch das Abdichten dieser Verbindungsstelle ist einfacher, weil diese Verbindung sich nicht mehr in der heißesten Zone, die unter extrem hohen Temperaturen und damit Ausdehnungsschwankungen steht, befindet. Der den Verbrennungsgaskanal im Guß-Formstück ergänzende Ansatzteil kann auf einfache Weise hergestellt werden, auch wenn mehrere Umlenkungen des Gasstromes vorgesehen sind. Durch die Mittelstege an den Umlenkstellen wird ferner erreicht, daß der Gasstrom geteilt und beiderseits verstärkt an die Kanalwände hingelenkt und dadadurch auch in diesen Bereichen, in denen jetzt aus gußtechnischen Gründen keine Innenrippen vorgesehen sein können, der Wärmedurchgang erhöht wird. Schließlich kann der Austrittskanal mit der Abgas-Anschlußmuffe ebenfalls aus einem einzigen Guß-Formstück hergestellt werden. Dies bringt den Vorteil, daß die Anschlußmuffe nunmehr exakt rund ist und dadurch die Abdichtung zum aufzusteckenden Gasschlauch verbessert wird.

Um auch bei dieser Gerätebauweise eine nach oben geneigte Abgas-Anschlußmuffe zu erhalten, wird der an der Gußhaube ausgebildete Anschlußflansch entsprechend geneigt, so daß sich hierdurch auch für den Ansatzteil mit der Anschlußmuffe die gewünschte Neigung ergibt.

Die Erfindung wird nachfolgend anhand eines Ausführungsbeispiels eines Raumheizgerätes mit mäanderförmigem Verbrennungsgaskanal, das auch in der Zeichnung schematisiert dargestellt ist, näher beschrieben. Es zeigen:

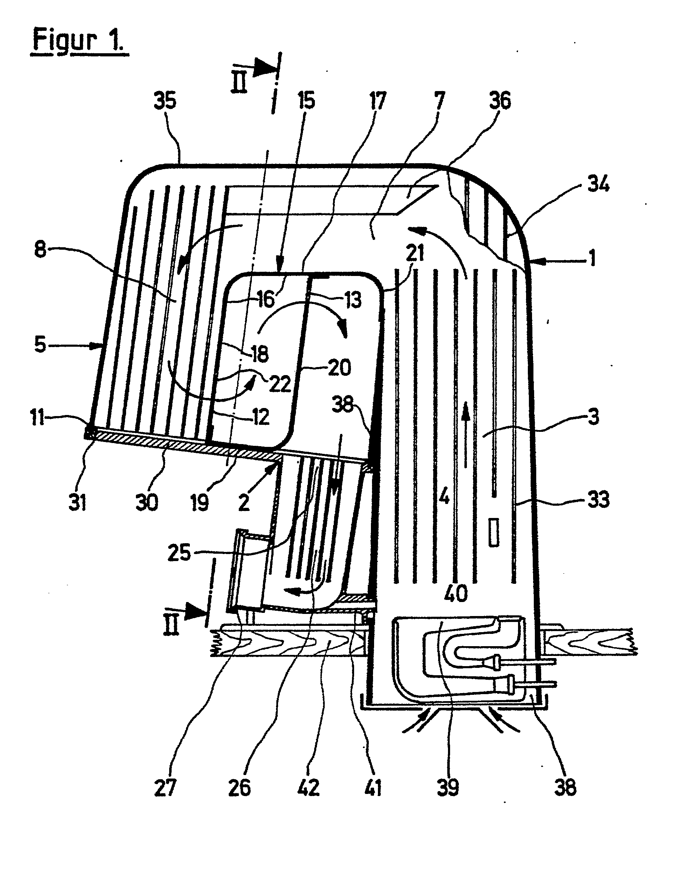

Fig. 1 einen Vertikalschnitt durch die Längsebene des Heizgerätes und

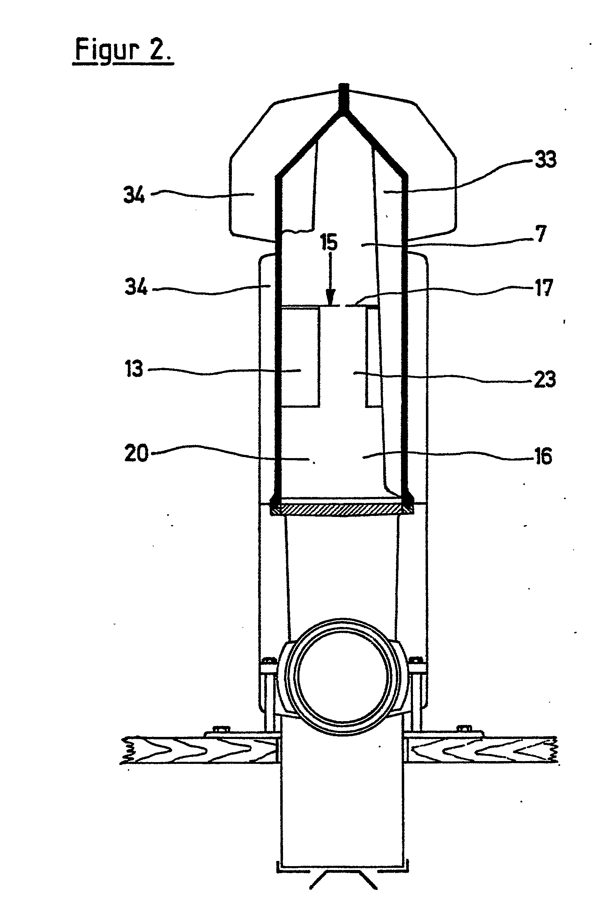

Fig. 2 einen Schnitt nach der Linie II-II der Fig. 1.

Das dargestellte Raumheizgerät setzt sich aus einem Form-Gußstück 1 und einer Zusatzeinrichtung 2 zusammen. Das Form-Gußstück besteht aus einem Gußschacht 3, der den aufwärtsführenden Verbrennungsraum 4 bildet und einer seitlich angeformten Gußhaube 5, die die äußeren Begrenzungswände für einen Querkanal 7 und einen abwärtsführenden Kanalteil 8 darstellt. Diese Gußhaube endet mit einem eine nach unten gerichtete Öffnung umgebenden Anschlußflansch 11. Um den Querkanal und den abwärts führenden Verbrennungsgaskanal mit seinen Umlenkungen 12,13 zu begrenzen, ist ein Leiteinsatz 15 der Zusatzeinrichtung 2 vorgesehen. Dieser Leiteinsatz besteht im wesentlichen aus einem gebogenen Blechstreifen 16 von der Gußhauben-Innenbreite, der eine Deckenwand 17 für die innere Begrenzung des Querkanales 7, eine Stirnwand 18 für die innere Begrenzung des abwärtsführenden Kanalteiles 8, eine Bodenwand 19, eine Mittelwand 20 für eine weitere Umlenkung 13 und schließlich eine Anschlußwand 21 zum Gußschacht bildet. Um die Umlenkung das Gasstromes zu ermöglichen, sind die Leiteinsatzwände an den entsprechenden Umlenkungen 12,13 bis auf einen schmalen Mittelsteg 22,23 verengt, so daß der Gasstrom aus dem abwärtsführenden Kanalteil 8 durch die Stirnwand-Umlenkung 12 in den Leiteinsatz eintritt, in diesem nach oben und unmittelbar unterhalb des Querkanales 7 durch die Mittelwand-Umlenkung 13 wieder nach unten geführt wird, wo er durch eine Durchtrittsöffnung 25 in einen Endkanal 26 und schließlich von der Anschlußmuffe 27 in einen Abgasschlauch (nicht dargestellt) einströmen kann. Die Durchtrittsöffnung 25 ist in einer Bodenplatte 30 ausgebildet, auf dem der Leiteinsatz errichtet ist und die mit ihrem Ansteckflansch 31 mit dem Anschlußflansch 11 der Gußhaube verbindbar ist. Zweckmäßigerweise wird der Endkanal 26 mit der Anschlußmuffe 27 ebenfalls als Gußstück und möglichst gußeinheitlich mit der Bodenplatte 30 geformt.

Wie aus der Zeichnung zu ersehen ist, sind am Guß-Formstück sowohl an den Innenwänden als auch an den Außenwänden Lamellen 33,34 angeformt, um den Wärmeübergang zu verbessern. Im Bereich des Querkanales 7 sowie des Leiteinsatzes 15 fehlen die Innenlamellen 33 aus gußtechnischen Gründen. Anstelle der üblichen Innenlamellen im Querkanal können eine oder mehrere von der Gußhauben-Decke 35 nach unten abstehende Deckenlamellen 36 vorgesehen sein.

Der Gußschacht 3 ist vorteilhaft um einen Eintrittsstutzen 38 verlängert, der durch den Raum- bzw. Aufstellboden (nicht gezeichnet) ragt und durch den die Verbrennungsluft einem Brenner 39 in einer Brennkammer 40 zugeführt wird.

Von der tiefsten Stelle des Endkanales 26 führt ein Kondenswasserrohr 41, das ebenfalls angegossen sein kann, in den Eintrittsstutzen, von wo das im Endkanal sich ansammelnde Kondenswasser ins Freie ablaufen kann.

Der Gußhauben-Anschlußflansch 11 verläuft zur Gußschacht-Mittelachse nicht senkrecht, sondern steigt nach außen etwas an. Die Verbindungsebene zwischen Gußhaube und Zusatzeinrichtung verläuft somit geneigt, so daß auch die Zusatzeinrichtung in geneigter Stellung sich befindet. Mit der Zusatzeinrichtung ist auch der Endkanal geneigt und die Anschlußmuffe erhält die gewünschte Schrägstellung für einen ansteigenden Abgas-Kaminanschluß. Dieser geneigten Stellung der Zusatzeinrichtung kommt auch eine keilförmige Wandverdickung (38) des Gußschachtes (3) im Anschlußbereich des Leiteinsatzes (15) entgegen.

## Patentansprüche

1. Mit gasförmigem oder vergastem flüssigen Brennstoff befeuertes Raumheizgerät für Kleinräume, insbesondere Wohnwagen, Fahrzeug- und Schiffskabinen, mit gegen den zu beheizenden Raum abgeschlossenem aufwärtsführenden Verbrennungsraum (4), an den sich ein als Wärmetauscher ausgebildeter Verbrennungsgaskanal anschließt, dessen oberer waagrechter Querkanal (7) in einen abwärtsführenden Kanal übergeht und nach einer weiteren Umlenkung in einem Endkanal (26) mit einer Abgas-Anschlußmuffe (27) endet, gekennzeichnet durch ein Guß-Formstück (1) aus einem den Verbrennungsraum (4) bildenden Gußschacht (3) sowie einer daran seitlich angeformten, den Querkanal (7) und den abwärtsführenden Kanal (8) nach außen begrenzenden Gußhaube (5), deren nach unten gerichtete Öffnung von einem Anschlußflansch (11) umgeben ist, und durch eine Zusatzeinrichtung (2) aus einem in die Gußhaube hineinragenden, den Verbrennungsgaskanal begrenzenden Leiteinsatz (15), einer mit dem Anschlußflansch (11) der Gußhaube mittels eines Ansteckflansches (31) gasdicht zu verbindenden Bodenplatte (30) wobei der Endkanal (26) von dieser Bodenplatte nach unten abgeht.

2. Heizgerät nach Anspruch 1, dadurch gekennzeichnet, daß der Leiteinsatz (15) der Zusatzeinrichtung für eine Umlenkung des Gasstromes aus einem die Gußhaubenbreite einnehmenden Blechstreifen (16) besteht, der mit seiner Deckenwand (17) den Querkanal (7) und mit seiner Stirnwand (18) den Kanalteil (8) nach innen begrenzt, durch eine zusätzliche Mittelwand (20) den Leiteinsatz unterteilt und durch Durchbrechungen in der Stirnwand und in der Mittelwand die Umlenkungen (12,13) bildet.

3. Heizgerät nach Anspruch 2, dadurch gekennzeichnet, daß in den Wand-Durchbrechungen Mittelstege (22,23) vorgesehen sind zum Ablenken des Gasstromes an die Gußhaubenwände.

4. Heizgerät nach einem der Ansprüche 1 bis 3, dadurch gekennzeichnet, daß Bodenplatte (30), Endkanal (26) und die Anschlußmuffe (27) in rechtwinkliger Zuordnung zueinander aus einem Formstück bestehen.

5. Heizgerät nach einem der Ansprüche 1 bis 4, dadurch gekennzeichnet, daß der Anschlußflansch (11) der Gußhaube vom angrenzenden Gußschacht (3) nach außen ansteigt.

6. Heizgerät nach einem der Ansprüche 1 bis 5, dadurch gekennzeichnet, daß das Guß-Formstück im Inneren des aufwärtsführenden Gußschachtes (3) und des abwärtsführenden Kanalteiles (8) in Strömungsrichtung vertikal verlaufende Innenrippen (33) aufweist.

7. Heizgerät nach einem der Ansprüche 1 bis 6, dadurch gekennzeichnet, daß im Querkanal (7) von der Gußhaubendecke (35) nach unten abstehende, in Strömungsrichtung verlaufende Deckenlamellen (36) angeformt sind.

8. Heizgerät nach einem der Ansprüche 1 bis 7, dadurch gekennzeichnet, daß das Guß-Formstück (1) vertikal verlaufende Außenlamellen (34) aufweist.

9. Heizgerät nach einem der Ansprüche 1 bis 8, dadurch gekennzeichnet, daß der Gußschacht (3) im Anschlußbereich des Leiteinsatzes (15) zum Anschlußflansch (11) hin keilförmig verdickt ist.

## Claims

1. A space heating appliance, fired with gaseous or gasified liquid fuel, for small spaces, more especially caravans, vehicle cabins and ships' cabins, having an upwardly leading combustion chamber (4) which is closed off towards the space that is to be heated and adjoining which there is a combustion gas duct which is designed as a heat exchanger, the upper horizontal transverse duct (7) of which merges into a downwardly leading duct and after a further deflection ends in an end duct (26) having a waste-gas connecting sleeve (27), characterised by a cast body (1) consisting of a cast shaft (3) which forms the combustion chamber (4) as well as a cast hood (5) which is integrally formed laterally thereon and which outwardly bounds the transverse duct (7) and the downwardly leading duct (8) and the downwardly directed aperture of which is surrounded by a connecting flange (11), and by an auxiliary device (2) consisting of a guide insert (15) which projects into the cast hood and bounds the combustion gas duct, a base plate (30) that can be connected in a gas-tight manner to the connecting flange (11) of the cast hood by means of a detachable flange (31), in which respect the end duct (26) departs downwardly from this base plate.

2. A heating appliance according to claim 1, characterised in that the guide insert (15) of the auxiliary device for a deflection of the gas flow consists of a sheet-metal strip (16) which occupies the width of the cast hood and which with its roof wall (17) inwardly bounds the transverse duct (7) and with its front wall (18) inwardly bounds the duct part (8), by an additional centre wall (20) subdivides the guide insert and by openings in the front wall and in the centre wall forms the deflections (12, 13).

3. A heating appliance according to claim 2, characterised in that central webs (22, 23) for the diversion of the gas flow onto the cast hood walls are provided in the wall openings.

4. A heating appliance according to one of claims 1 to 3, characterised in that the base plate (30), the end duct (26) and the connecting sleeve (27) consist of a shaped part in rectangular association with one another.

5. A heating appliance according to one of claims 1 to 4, characterised in that the connecting flange (11) of the cast hood rises outwardly from the adjoining cast shaft (3).

6. A heating appliance according to one of claims 1 to 5, characterised in that the cast body has internal ribs (33) which extend vertically in the flow direction in the interior of the upwardly leading cast shaft (3) and of the downwardly leading duct part (8).

7. A heating appliance according to one of claims 1 to 6, characterised in that ceiling lamellae (36), which protrude downwardly from the ceiling (35) of the cast hood and which extend in the flow direction, are integrally formed in the transverse duct (7).

8. A heating appliance according to one of claims 1 to 7, characterised in that the cast body (1) has vertically extending outer lamellae (34).

9. A heating appliance according to one of claims 1 to 8, characterised in that the cast shaft (3) in the connection region of the guide insert (15) is thickened in a wedge-shaped manner towards the connecting flange (11).

## Revendications

1. Appareil de chauffage de locaux, alimenté par un combustible gazeux ou liquide gazéifié pour petits locaux, en particulier pour caravanes, habitacles de véhicules et cabines de bateaux, comprenant une chambre de combustion (4) s'étendant vers le haut, isolée du local à chauffer, à laquelle se raccorde un conduit de gaz de combustion réalisé sous la forme d'un échangeur de chaleur, dont le conduit transversal supérieur horizontal (7) se prolonge dans un conduit ascendant, et se termine, après un nouveau changement de direction, dans un conduit d'extrémité (26) muni d'un manchon de raccordement des gaz de fumée (27), caractérisé par une pièce de fonderie (1), qui est composée d'une cheminée coulée (3) formant la chambre de combustion (4) ainsi que d'un capot en fonte (5), venu de fonderie latéralement à cette cheminée, et qui délimite extérieurement le conduit transversal (7) et le conduit descendant (8), capot dont l'ouverture dirigée vers le bas est entouré d'une bride de raccordement (11); et par un dispositif rapporté (2), composé d'une insertion directrice (15) qui est engagée dans le capot en fonte et délimite le conduit des gaz de combustion, d'une plaque de fond (30), destinée à être assemblé à joint étanche aux gaz à la bride de raccordement (11) du capot en fonte à l'aide d'une bride de fixation (21), le conduit d'extrémité (26) partant de cette plaque de fond vers le bas.

2. Appareil de chauffage selon la revendication 1, caractérisé par le fait que l'insertion directrice (15) du dispositif rapporté, qui sert à imposer un changement de direction, au courant gazeux, est composée d'une bande de tôle (16) occupant la largeur du capot en fonte, qui limite intérieurement le conduit transversal (7) par sa paroi de plafond (17) et la partie de conduit (8) par sa paroi frontale (18), divise l'insertion directrice par une paroi centrale additionnelle (20) et forme les changements de direction (12, 13) par des ouvertures ménagées dans la paroi frontale et dans la paroi centrale.

3. Appareil de chauffage selon la revendication 2, caractérisé par le fait que dans les ouvertures de la paroi, sont prévues des nervures centrales (22, 23) servant à dévier le courant gazeux le long des parois du capot en fonte.

4. Appareil de chauffage selon l'une des revendications 1 à 3, caractérisé par le fait que la plaque de fond (30), le conduit d'extrémité (26) et le manchon de raccordement (27) sont disposés à angle droit l'un par rapport à l'autre et sont formés d'une pièce coulée.

5. Appareil de chauffage selon l'une des revendications 1 à 4, caractérisé par le fait que la bride de raccordement (11) du capot est en pente montante vers l'extérieur à partir de la cheminée en fonte (3) qui lui est adjacente.

6. Appareil de chauffage selon l'une des revendications 1 à 5, caractérisé par le fait que la pièce de fonderie présente, à l'intérieur de la cheminée en fonte ascendante (3) et de la partie de conduit descendante (8), des nervures intérieures (33) qui s'étendent verticalement dans la direction de l'écoulement.

7. Appareil de chauffage selon l'une des revendications 1 à 6, caractérisé par le fait que, dans le conduit transversal (7), sont venues de fonderie des ailettes de plafond (36) qui pendent vers le bas du plafond (35) du capot en fonte, et qui sont orientées dans la direction de l'écoulement.

8. Appareil de chauffage selon l'une des revendications 1 à 7, caractérisé par le fait que la pièce de fonderie (1) présente des ailettes extérieures (34) orientées verticalement.

9. Appareil de chauffage selon l'une des revendications 1 à 8, caractérisé par le fait que la cheminée en fonte (3) s'épaissit en forme de coin dans la région de raccordement entre l'insertion directrice (15) et la bride de raccordement (11).

# Figur 1.

# <u>Figur 2.</u>